# EUROPEAN PATENT APPLICATION

(11) **EP 1 696 349 A1**
(43) Date of publication of application: **30.08.2006**
(21) Application number: 06100891.8
(22) Date of filing: 26.01.2006
(51) Int. Cl.: G06F 17/30

(54) **Composable query building API and query language**

(30) Priority: 28.02.2005 US 657341 P; 25.07.2005 US 188421
(71) Applicant: Microsoft Corporation, Redmond WA 98052 (US)
(72) Inventor: Albahari, Benjamin, Redmond, WA 98052 (US); Sheppard, Edward G., Redmond, WA 98052 (US); Deem, Michael E., Redmond, WA 98052 (US)
(74) Representative: Grünecker, Kinkeldey, Stockmair & Schwanhäusser Anwaltssozietät

(57) **Abstract**

A system for constructing information search queries is provided. The system comprises a query language that has a predefined syntax and a constructor that creates a search object. The search object encapsulates a query constructed in the query language. Methods for using the system are also provided.

## Description

### CROSS-REFERENCE TO RELATED APPLICATION

This is an application claiming benefit under 35 U.S.C. §119(e) of U.S. Provisional Patent Application Serial No. 60/657,341, entitled "COMPOSABLE QUERY BUILDING API AND QUERY LANGUAGE" and filed on February 28, 2005. The entirety of the aforementioned application, including all appendices thereto, is hereby incorporated by reference.

### BACKGROUND

Computers are now commonly used to store, search for, and retrieve data as some of their primary tasks. Advances in various computing-related fields, such as dramatic increases in calculation speeds of processing units and data densities of storage devices, mean that more data can be stored, searched, and retrieved by computing systems than ever before. The vast quantity of data that can now be stored, searched, and retrieved creates challenges for systems that search through and organize that stored data.

Searches for data can be both complex to design and slow to execute. Complexity is usually derived at least in part from both the quantity of data to be searched and how that data is organized for storage. Complexity can also depend greatly on the specific means employed to perform a search for desired information within the great mass of data available. That specific means, such as a choice of a query language or the creation of a search query, can also have a great impact on the speed with which a search can be performed.

Performing a query typically requires a developer to construct a single large string, or other data structure, that contains an entire query composed in a predefined query language. The developer usually must then pass the entire query to an application programming interface ("API") that provides functions that will execute the query. Individual parts of the composed query usually cannot easily be reused or combined to create different queries. In addition, the developer is usually not aided in the construction of the query by the API, but rather must generally know all the capabilities of the query language in order to create a query.

Generally, a great deal of effort is expended constructing and reconstructing individual queries to locate various pieces of information. This approach is at odds with common principles of object-oriented software engineering that teach that computer code should be modular and reusable. Benefits of object-oriented design and programming practices have not generally been available in information search systems. Current systems fail to provide benefits of modular or reusable software designs for composing or constructing queries.

### SUMMARY

The following presents a simplified summary in order to provide a basic understanding of some aspects of the disclosed and described components and methods associated with those components. This summary is not an extensive overview. It is neither intended to identify key or critical elements nor delineate scope. Its sole purpose is to present some concepts in a simplified form as a prelude to the more detailed description that is presented later. Additionally, section headings used herein are provided merely for convenience and should not be taken as limiting in any way.

A system for creating modular queries on data is provided. The system includes an application programming interface that allows developers to access constructors and accessors for query objects. The application programming interface also aids in the construction of these query objects. Query objects can encapsulate at least portions of queries and can themselves be encapsulated in other query objects to create more complex queries that build from earlier encapsulated query portions. The query objects can be used directly or by applications to search for stored information.

A system for representing search queries is provided. Discrete portions of queries composed in a predefined query language are represented in a tree structure. The tree structure can be used as a portion of a more complex query structure by referencing another tree structure or being referenced itself Tree structures are encapsulated in query objects for use when performing queries.

Query objects can be used as composable building blocks of more complex queries by linking query objects together or encapsulating query objects within each other. Query objects can be constructed using an application space query language that can be mapped to a storage space query language. Such mapping can be accomplished using a schema space. Query objects constructed using an application space query language can be used to locate stored information that can be queried using a variety of storage space query languages by defining the schema space between the two query languages.

A query builder can assist in construction of query objects for use during searches for stored information. The query builder can be accessed through a user interface that allows a user to select portions of a query to integrate into a completed query. The completed query can be used to search for information in storage. The query builder can build a completed query itself or can use a query descriptor to find a matching query object that has been previously constructed and is available for use.

The disclosed and described components and methods comprise the features hereinafter fully described and particularly pointed out in the claims. The following description and the annexed drawings set forth in detail certain illustrative features. These features indicate a few of the various ways in which the disclosed and described components and methods can be employed. Specific implementations of the disclosed and described components and methods can include some, many, or all of such features and their equivalents. Variations of the specific implementations and examples presented herein will become apparent from the following detailed description when considered in conjunction with the drawings by one of ordinary skill in the art.

### BRIEF DESCRIPTION OF THE DRAWINGS

FIG. 1 is a system block diagram of a query construction system in accordance with one aspect of the disclosed invention.

FIG. 2 is a system block diagram of a tree structure that can represent a query.

FIG. 3 is a system block diagram of a bound search object.

FIG. 4 is a block diagram of a mapping between an application space and a storage space.

FIG. 5 is a system block diagram of a storage medium search system.

FIG. 6 is a system block diagram of a query construction system.

FIG. 7 is a system block diagram of a query construction system including remote access to preconstructed query objects.

FIG. 8 is a flow diagram of a general processing flow that can be used in conjunction with components disclosed or described herein.

FIG. 9 is a flow diagram of a general processing flow that can be used in conjunction with components disclosed or described herein.

FIG. 10 is a flow diagram of a general processing flow that can be used in conjunction with components disclosed or described herein.

FIG. 11 is a flow diagram of a general processing flow that can be used in conjunction with components disclosed or described herein.

FIG. 12 illustrates an exemplary networking environment.

FIG. 13 illustrates an exemplary operating environment.

### DETAILED DESCRIPTION

As used in this application, the terms "component," "system," "module," and the like are intended to refer to a computer-related entity, such as hardware, software (for instance, in execution), and/or firmware. For example, a component can be a process running on a processor, a processor, an object, an executable, a program, and/or a computer. Also, both an application running on a server and the server can be components. One or more components can reside within a process and a component can be localized on one computer and/or distributed between two or more computers.

Disclosed components and methods are described with reference to the drawings, wherein like reference numerals are used to refer to like elements throughout. In the following description, for purposes of explanation, numerous specific details are set forth in order to provide a thorough understanding of the disclosed subject matter. It may be evident, however, that certain of these specific details can be omitted or combined with others in a specific implementation. In other instances, certain structures and devices are shown in block diagram form in order to facilitate description. Additionally, although specific examples set forth may use terminology that is consistent with client/server architectures or may even be examples of client/server implementations, skilled artisans will appreciate that the roles of client and server may be reversed, that the disclosed and described components and methods are not limited to client/server architectures and may be readily adapted for use in other architectures, specifically including peer-to-peer (P2P) architectures, without departing from the spirit or scope of the disclosed and described components and methods. Further, it should be noted that although specific examples presented herein include or reference specific components, an implementation of the components and methods disclosed and described herein is not necessarily limited to those specific components and can be employed in other contexts as well.

Artificial intelligence based systems (for example, explicitly and/or implicitly trained classifiers) can be employed in connection with performing inference and/or probabilistic determinations and/or statistical-based determinations as described hereinafter. As used herein, the term "inference" refers generally to the process of reasoning about or inferring states of the system, environment, and/or user from a set of observations as captured by events and/or data. Inference can be employed to identify a specific context or action, or can generate a probability distribution over states, for example. The inference can be probabilistic. - For example, an inference can include the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources. Various classification schemes and/or systems (for example, support vector machines, neural networks, expert systems, Bayesian belief networks, fuzzy logic, data fusion engines, or other similar systems) can be employed in connection with performing automatic and/or inferred actions.

Furthermore, the disclosed and described components can be implemented as a method, apparatus, or article of manufacture using standard programming and/or engineering techniques to produce software, firmware, hardware, or any combination thereof to control a computer. The term "article of manufacture" as used herein is intended to encompass a computer program accessible from any computer-readable device, carrier, or media. For example, computer readable media can include but are not limited to magnetic storage devices (such as hard disks, floppy disks, magnetic strips, or other types of media), optical disks (such as compact disks (CDs), digital versatile disks (DVDs), or other similar media types), smart cards, and flash memory devices (e.g., card, stick, key drive...). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope or spirit of the disclosed and described components and methods.

Application developers can construct complex queries, often involving a number of different types of joins between various sets of data, using a sequence of simple individual API calls that compose queries in various ways. The API can aid in the construction of queries by exposing query capability to the programmer in ways that are easy to discover and use. Additionally, an API such as the one disclosed and described herein can provide a mechanism through which a programmer can create or build modular or reusable portions or queries that can be applied in other queries or in a similar query used in a different context.

A specific query language used to express queries can be specifically constructed to allow the incremental construction and composition of queries. Use of such a language can allow a developer to better utilize search functions when constructing queries. Such a query language can also facilitate creation of modular queries that can be reused in whole or in part. Query reuse and easy alteration of queries by substituting modules can also reduce the amount of time needed to create new queries.

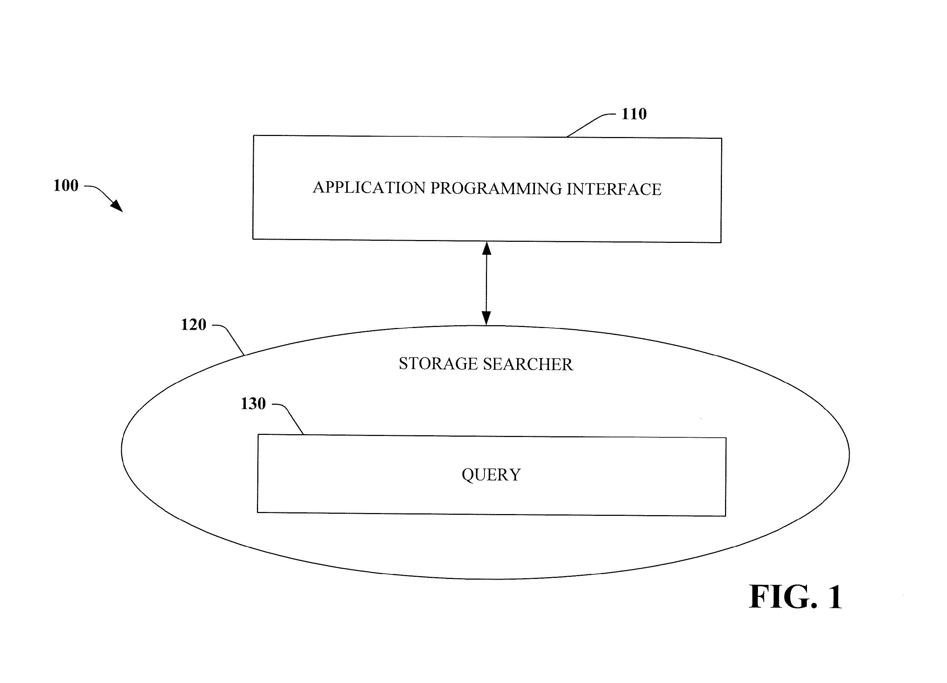

FIG. 1 is a system block diagram of a query construction system 100. The query construction system 100 can be used to create an object that can encapsulate a query. A constructed object can also be used to perform a search for information stored on a computer system. As used herein, the term object can refer not only to a computing object in an object oriented computing environment but also to other appropriate data structures or constructs from other computing paradigms, such as data structures as found in the C or C++ programming languages or combinations of such structures along with executable code.

The query construction system 100 includes an application programming interface ("API") 110 that can be used to create a storage searcher object 120. The API can provide access to methods of the storage searcher object, such as constructors and accessors, among others. One of the benefits of using an API such as the API 110 is that commonly-used or necessary functions provided by the object can be made accessible to programmers through a clearly established system. Another benefit is that specific, lower-level implementation details of functions provided through the API 110 can be changed, for example, to correct defects, without breaking components that depend on that functionality. Further, the API 110 can be implemented such that the functions and components to which the API 110 provides access are natural-feeling parts of a query language as opposed to carriers for query strings composed in a query language that is not part of the programming language being used and that are passed to other components to perform searches.

The storage searcher object 120 encapsulates a query 130. Access to the query 130 is through the storage searcher object 120 that was created using the API 110. Such access can be accomplished using method calls or some other appropriate access method as indicated in a specific implementation. An arrangement such as this one can enhance integrity of the query in the sense that random or rogue users or processes cannot easily change the query, either by accident or otherwise. The query 130 can be composed in a predefined query language with its own syntax. The syntax of the predefined query language can be constructed so that query portions are modular and reusable. Additionally, the syntax can facilitate representation of queries, or portions of queries, in a tree structure. A tree structure such as this can be joined to or reference other tree structures to accumulate other portions of queries and build more complex queries.

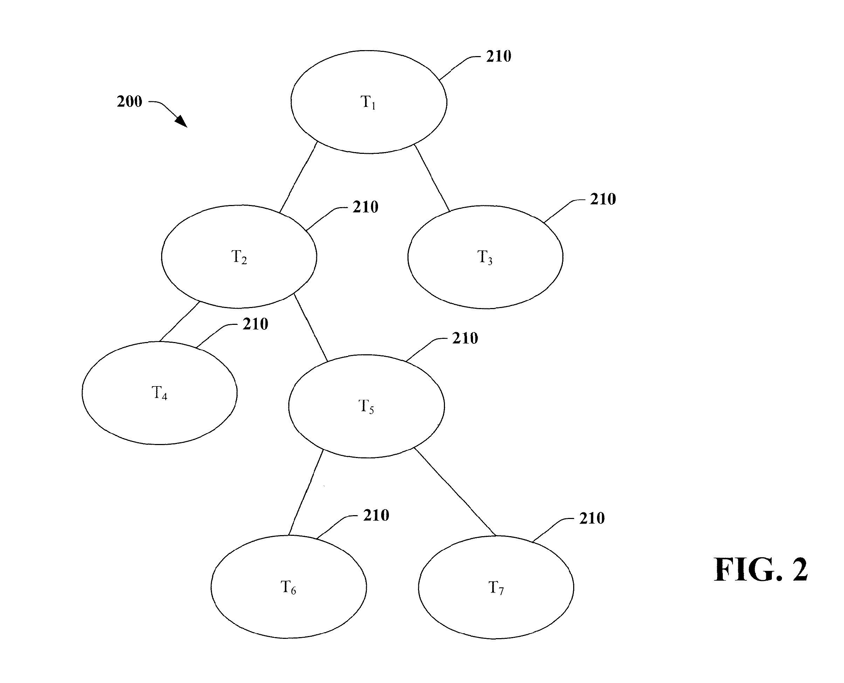

FIG. 2 is a system block diagram of a tree structure 200 that can represent a query or portion of a query. The tree structure 200 includes a plurality of nodes 210. Each node 210 can include a term of a query. A term can include search terms and operators such as select, project, or join, among other things depending upon a specific implementation. Nodes, such as one of the nodes 210, can be linked together to express logical connections between query terms. The tree structure 200 can represent an entire query or merely a portion of a query. In either case, the tree structure 200 can be used as part of a more complex query by joining it with another tree structure. The tree structure 200 can be encapsulated in a search object for use during search functions.

The tree structure 200 can also be encapsulated in an object such as an expression object (not shown). The expression object can be encapsulated by a searcher object, such as the storage searcher object 120 disclosed and described in conjunction with FIG. 1. An expression object can be built as a query is constructed. Similarly, the expression object can be processed when the query is executed. In addition to or as an alternative to a query string, an expression object that represents a query can be passed to a searcher constructor to create a new searcher object that encapsulates the query represented by the expression object.

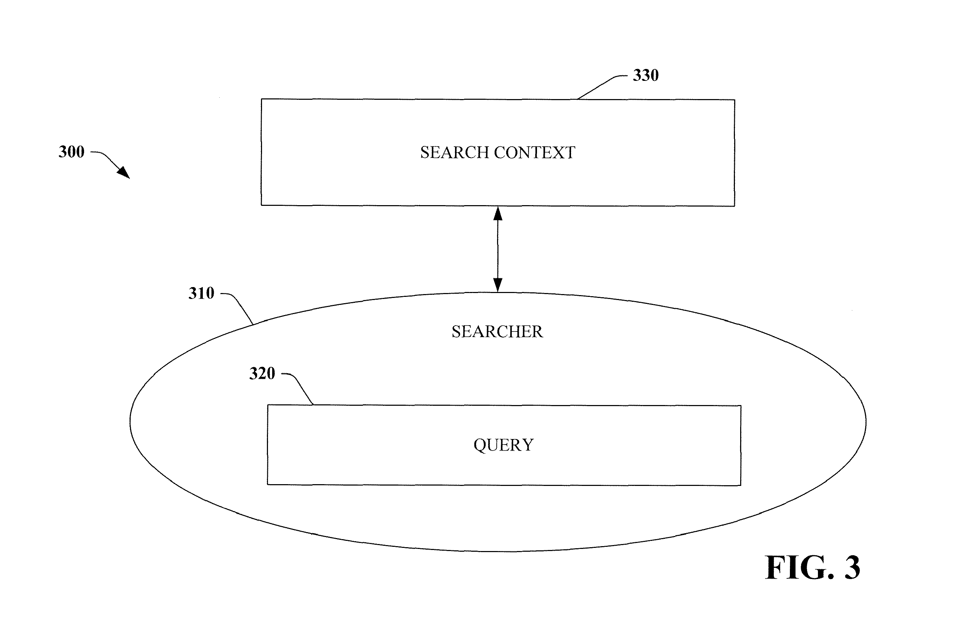

FIG. 3 is a system block diagram of a bound search object. The bound search object can be used to perform a search within a context to which it is bound.
In this example, and elsewhere as required or appropriate, a context can include a search domain, a physical storage area, or both, As shown in this specific example, a searcher object 310 has been created using an API, such as the API 110 of FIG. 1. The searcher object 310 includes a query 320. The query 320 can be a complete query that has been created as a single monolithic query or as a collection of partial queries assembled from modular pieces of partial queries.

The searcher object 310 can be bound to a context 330. The context 330 can be a set of information that can be represented in a predefined manner to facilitate searching through the set by searcher objects such as the searcher object 310 depicted. It should be noted that although only a single searcher object 310 and a single context 330 are depicted for ease of illustration and description, more than one searcher object can be bound to a single context. Similarly, a single searcher object can be used with more than one context. Such use can be though multiple bindings or by removing a preexisting binding to a context and adding a new binding to a new context.

A searcher object, such as the searcher 310, can be implemented as a class in an object-oriented programming language. Appropriate object-oriented programming languages that can be used include Java and SmallTalk. The class can appear as a collection that implements an enumeration method along with various other methods that can be used to construct other searcher objects as classes or instances of a class or classes. Constructor methods can accept one or more searcher objects as an input parameter or parameters and output a new searcher object that encapsulates any searcher object passed to it as an input parameter. In this manner, more complex queries can be constructed. Constructed searcher objects can represent filtered, sorted, or grouped collections, among other types. A query represented by a searcher object can be executed when an application begins enumerating over contents of a searcher object.

Alternatively, the searcher 310 can be implemented as a data structure, such as a data structure that can be created in a high-level programming language like C or C++, among others. In this type of implementation, attributes of the searcher object that would otherwise be represented by object oriented features, for example other encapsulated objects, can be implemented as fields of such a data structure or as otherwise appropriate to represent a specific object oriented feature. Appropriate functions can be defined to access, use, or otherwise manipulate member fields of the data structure. Failure to list examples from other computing paradigms, such as functional programming, among others, does not imply that corresponding implementations are not possible in those paradigms.

The context 330 can also be implemented as a class in an object-oriented programming language. A context class can provide a number of various properties, such as items, that can be used as starting point searchers. A pattern for a starting point searcher can also be a data class code generation pattern that includes one or more properties or one or more methods for creating new searchers, or both. For example, a context class can include an items property that represents all items in the context. An enumeration method can be used to display information about each item in the searcher object. Various manipulation methods, such as sorting and grouping methods, can be used to arrange included items in a desired fashion. Many other properties or methods can be implemented. For example, the context 330 can be implemented as another appropriate data structure as previously described in conjunction with other components. Various functions such as enumeration or iteration functions can be used in conjunction with such data structures.

As mentioned above, a searcher object, such as the searcher object 310, can encapsulate a query, such as the query 320. To construct the query 320, a searcher class can provide a number of methods for constructing queries. These methods generally can accept a searcher object as input, perform some data manipulation function, and output a new searcher object that encapsulates the input searcher object as a subquery. In this manner, increasingly complex queries can be composed.

Many possible methods can be created to perform functions that are analogous or similar to functions performed by various commands in a query language. A filter method can be provided that filters objects based upon property values of those objects. A type filter can filter an object based upon its type. A treat as type method can convert as searcher object from one that searches over a subtype to a searcher that searches over a supertype. A sort method can sort objects based upon one or more property values. A project method can project one or more individual properties of one or more objects. A group method can group objects according to one or more values. A union method can create a union of two sets of objects. Additionally, a query method can apply a complex query in a single step. Methods can be implemented such that invocation of a method can be used as a shortcut for calling the query method.

Encapsulated queries and subqueries can be used as a chain of queries to isolate each phase of execution of the query from each other phase. In so doing, each successive phase of execution of a query can only affect data produced by a preceding phase. However, this scheme can potentially result in commands executed in later phases that can undo or destroy at least parts of calculations or results from previous phases, such as ordering or grouping operations. To mitigate this concern, methods can be implemented in manners that guarantee that ordering will be preserved by the operation performed by that method. Additionally or alternatively, methods can be specified to be invoked in orders that will preserve ordering or grouping. Still further, certain types of methods, such as ordering or grouping methods, can be prevented from executing at certain phases or limited to executing only at phases where it is unlikely that work performed by those methods will be undone or destroyed by invocation of later methods.

To execute a query and obtain search results, a search object or search class can support a number of methods. For example, a get enumerator method can enumerate through all query results. A first result in a set of query results can be obtained by using a get first method. A get list method can copy query results into a list of query results. A get count method can obtain a count of a number of objects included in a query result. Indication whether execution of a query has produced any results can be obtained using a check for results method.

When constructed, a searcher object can be parameterized with a type of data over which the constructed searcher object can or will execute. Instances of that type can be returned by the searcher object when the searcher object executes. Additionally or alternatively, a record type can be returned. A record class can represent structural types for which there is no corresponding type. Queries over such types can be produced by a project method and a group method. Two searcher objects that return record types can be over the same type if and only if the record objects returned by each searcher object would have exactly the same number of columns with the same names and types.

In the examples presented herein, query expression strings that can be passed to a searcher object can accept two forms of parameters. The first form is a positional parameter. When using a positional parameter, a query string can refer to parameter values by position in an array of values that can be passed with the query string to a method. Positional parameters can be useful in scenarios when a query will be executed only once or where the value that is bound to the parameter does not change from one execution to another.

The second form is a named parameter. When using named parameters, the query string can refer to parameter values by using a name for the parameter. A dictionary of name to value mappings can be bound to the searcher object, thereby producing a new searcher object, before a query is executed. Named parameters can be useful in situations where the same query is executed multiple times with different parameter values. Using named parameters is slightly more complex than using positional parameters because of the additional binding operation.

Both positional parameters and named parameters can be used in the same query string and can only be used to provide literal values or subqueries. These parameters cannot be used to provide a property or method name by using a parameter. Subqueries can be passed as a parameter by using an expression object or a searcher object. In other implementations, different approaches or additional forms of parameters can be used.

A searcher object, such as the searcher object 310, can be implemented as a generic class. This specific implementation can make the searcher class difficult to use by applications that dynamically build queries based upon user input. To mitigate this difficulty, a factory class and a searcher interface can be implemented. Such a factory class and searcher interface can allow for the construction and manipulation of searcher objects without use of generic types or methods.

Use of these types without using generics can be useful for late bound applications that can build queries based upon user input. Constructor methods of factory types can be used to construct searcher objects. A type that can be specified in a parameter can correspond to a generic type in a class definition. The class definition can provide descriptions of a number of methods that can correspond to generic versions of the created type. Implementation of these methods can have the same semantics and restrictions as methods of the generic type.

As disclosed and described previously, various components can be implemented as a class or as an instance of a class. In one possible implementation, instances of classes can be immutable. Methods that manipulate a searcher object can return a new searcher object that encapsulates a new query that is based at least in part upon an original query. This implementation allows for protection of starting point queries in the sense that starting point queries cannot be modified. Additionally, this design choice lends itself to query optimizations through maintenance of a hash of query expressions that have been processed previously and reuse of those queries.

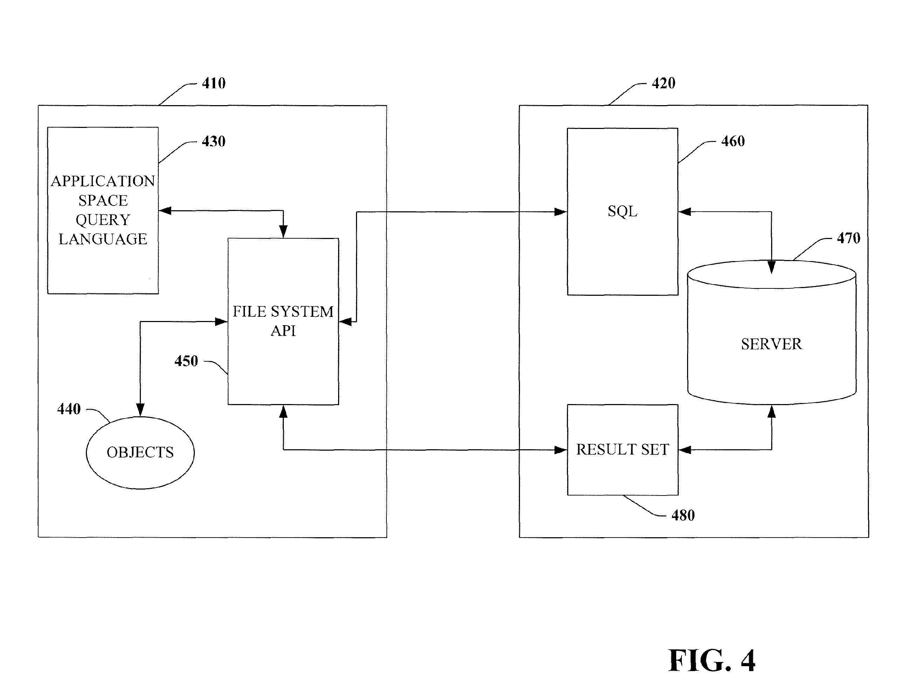

FIG. 4 is a block diagram of a mapping between an application space 410 and a storage space 420. The application space 410 can be a set of types that are used by a consumer of a file system API. Consumers can be classes that are automatically generated from descriptions that are encoded in a schema. Other types of objects can also be supported. Additionally, other data structures can be used in place of or in addition to objects or classes.

The storage space 420 can include a set of types that can be used by a back end provider of storage services. These back end services can be structured query language (SQL) types or user defined types (UDTs) that are generated for use by the store, among others. A schema space (not shown) can also be used. Such a schema space can support use of abstract types that are defined by a type designer. Additionally, a schema space can be used to assist with, or define, a mapping between the application space 410 and the storage space 420.

A mapping can be used to relate object-oriented concepts and constructs to SQL concepts. For example, a collection that can be enumerated can be mapped to a typed table or relation. An object can be mapped to a typed row or tuple. A property or method can be mapped to a column or attribute of a simple or user-defined type or for collections, a typed nested table. Other mappings are possible. It should be appreciated that specific details of mappings are largely dependent upon specific queries and implementations.

The application space 410 can include an application space query language 430. The application space query language 430 can be used by applications to construct or perform searches of stored information. The application space query language 430 can be a simple language that supports basic filtering commands or can be a full-featured query language with support for nesting and other complex concepts. Stored information can be in the form of objects 440 that are stored in a file system that can be accessed through a file system API 450. The application space query language 430 ultimately facilitates searches of the file system.

The design of the application space query language 430 and specifically its interaction and use by searcher objects can facilitate use of multiple query string syntaxes simultaneously. An application using a searcher object can identify which syntax is in use by examining the query string itself Additionally or alternatively, the application can access an assembly-level attribute to determine which syntax is being used. Other syntax matching approaches can also be employed.

In the examples presented herein, queries expressed by an application using a searcher object are always written in terms of the schema space of the application. Types, properties, and methods mentioned in the query string of the searcher object are those types, properties, and methods used by the application. This convention can be changed with modifications to the components and methods disclosed or described herein. However, use of this convention preserves the perspective of an application programmer working in the application space 410. Such preservation can make construction or use of queries by application programmers easier by presenting such application programmers with an environment with which the application programmers are already familiar.

A searcher object can be integrated with an object oriented or other programming language to support language integrated queries. To support language integrated queries, a searcher object can implement a queryable interface that has a single query method. The query method can take a parsed query expression and return an appropriate interface object. This query expression can be parsed and validated by a compiler at compile time.

For programming languages that do not or cannot support language integrated queries, or even for programming languages that do support language integrated queries, a query in a string can be used. The query in a string approach can work well when dynamically creating a query while an application is running. Because language integrated queries are commonly used as compile-time features, it can be difficult to dynamically build a query during execution or runtime. Strings can be concatenated to build dynamic queries during runtime.

The storage space 420 can include a structured query language 460. The structured query language can be a query language like SQL that can be used to perform queries against a database or a data server. A data server 470 can include data that can be queried for information to produce a result set 480. The result set 480 can include data that results from a set of manipulation commands in an SQL query issues against the data server 470.

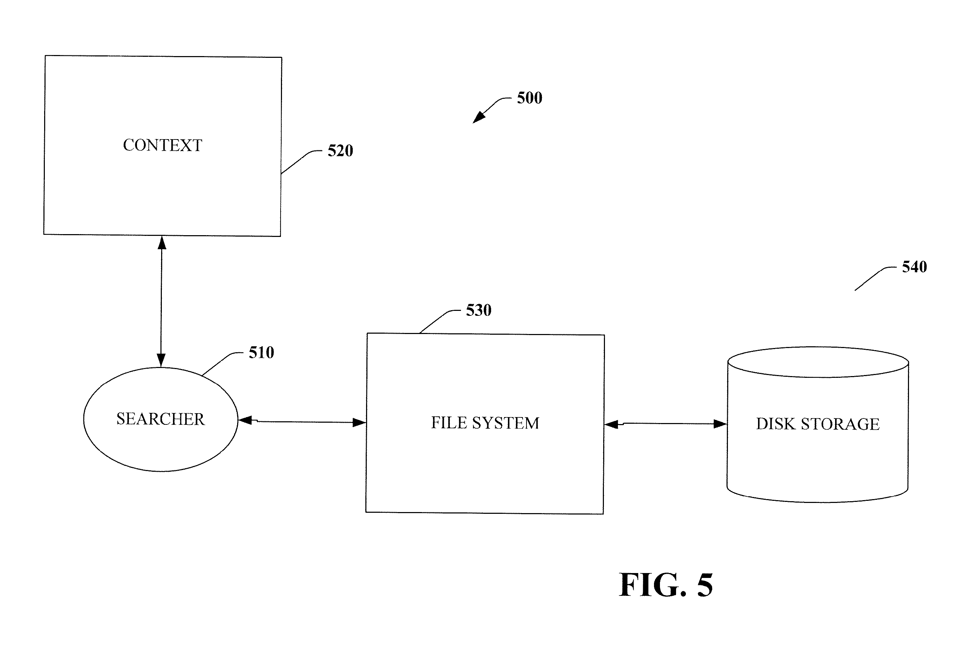

FIG. 5 is a system block diagram of a storage medium search system 500. The storage medium search system 500 can be used to search for information in a file system. The file system can be located on a disk drive on a local computer or can be on some other medium such as flash memory or another suitable storage medium. Additionally or alternatively, the file system can be located on a remote computer, such as a networked server. Other storage configurations, such as RAID arrays or SANs can also be used with the file system.

The storage medium search system 500 includes a searcher object 510. The searcher object 510 can be implemented as any of the searcher objects previously described in conjunction with other figures. The searcher object 510 can be bound to a context 520. The context 520 can represent a set of information to be searched by the searcher object 510 and can be implemented as one of the contexts previously disclosed or described in conjunction with other figures.

The searcher object 510 can operate over a file system 530. The file system 530 can be any logical arrangement of electronic files that can also support objects and operations by or on objects. The file system 530 can reside on a disk storage system 540. The disk storage system 540 can be a single disk or can be a disk array such as a redundant array of independent disks (RAID), a storage area network (SAN), or another suitable storage medium, including an optical medium.

In operation, the storage medium search system can operate as follows. The searcher object 510 also accesses the context 520 to determine contextual limits for a search. The searcher object 510 accesses the file system 530 to locate files or objects within the context specified by the context 520. A series of methods is invoked by the searcher object 510 to perform a query encapsulated within the searcher object 510. To execute these methods, the searcher 510 reads information from the disk storage system 540. The searcher object 510 determines which information from the file system 530 is responsive to the executed query and outputs the results of its search.

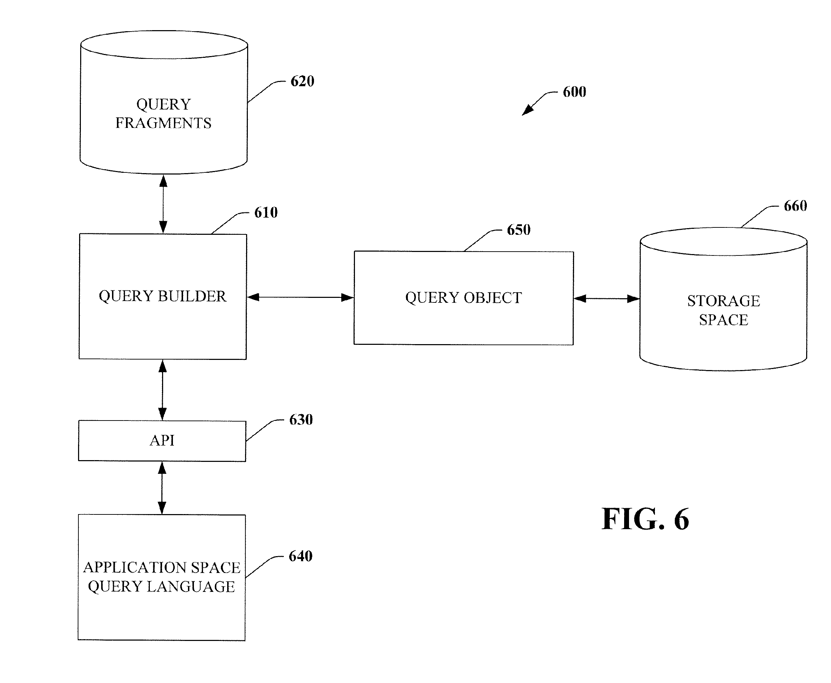

FIG. 6 is a system block diagram of a query construction system 600. The query construction system 600 can provide an ability for an application programmer or other user to compose queries that can be integrated with other components on a computing system. Specifically, the query construction system 600 can allow for composition of queries from preexisting fragments or user-created fragments by defining search terms or operators.

The query construction system 600 includes a query builder 610. The query builder 610 can include a user interface (not shown) that provides access to the query builder 610 for a user. The user interface can be a graphical user interface, a text-based interface, a web-based interface, or any other suitable user interface. Specifically, the user interface of the query builder 610 can allow for a user to select items to include in a query being composed through a series of menus, navigation aids, or text entry boxes, among others. It should be recognized that specifics of the types of tools available for constructing queries through a user interface of the query builder 610 largely depend upon the type of user interface employed.

The query builder 610 also can include logic components for ensuring that queries are ultimately constructed in a logical and comprehensible fashion. As part of that logic, methods can be employed to rewrite queries that conform to semantic or syntactic requirements. Additionally or alternatively, these logic components can rewrite queries that are more efficient to execute than an initial query as entered by a user. In either case, the logic can also ensure that a rewritten query is correct.

The query builder 610 can access query fragments stored in a query fragment data store 620. The query fragment data store 620 can be implemented as a database, a collection of objects, or another suitable type of data store depending upon specific implementation details. Each fragment included in the query fragment data store 620 can be used as part of a more complex query. Additionally, at least some of the query fragments can be fully constructed queries in their own right and usable without further modification. When constructing a query, the user can access these query fragments through the user interface of the query builder 610.

The query builder 610 can also access an API 630. The API 630 can provide access to components or functions of an application space query language 640. By calling functions or accessing members through the API 630, a programmer can ensure that a query built conforms with any syntactic or semantic requirements of an underlying query language, such as the application space query language 640. By using the query builder 610, a programmer does not have to be concerned with details of the API 630. Instead, the query builder 610 can ensure that all queries are built in accordance with features of the API.

A query object 650 can be created by the query builder 610. This query object 650 can encapsulate a query in the manner previously described in conjunction with other figures. Additionally or alternatively, the query object 650 can be added to the query fragment data store 620 as a query fragment that is available for further use by the query builder 610 in constructing a query. As a stand-alone query, the query object 650 can be integrated with an application or simply used to perform a query to locate information stored in a storage space 660. Depending upon a specific implementation, the query object 650 can use a schema or a file system API (not shown) to access information stored in the storage space 660.

In operation, the query construction system 600 can function as follows. A user can access a user interface of the query builder 610 to construct a query. Upon selection of an appropriate interface tool, the query builder will obtain a query fragment from the query fragment data store 620 to include in a query under construction. The query builder 610 gathers all query fragments input by the user along with any query fragments selected from the query fragment data store 620 and uses the API 630 to assemble a the query object 650 in accordance with the application space query language 640. The query object 650 is then used to perform a query against information stored in the storage space 660.

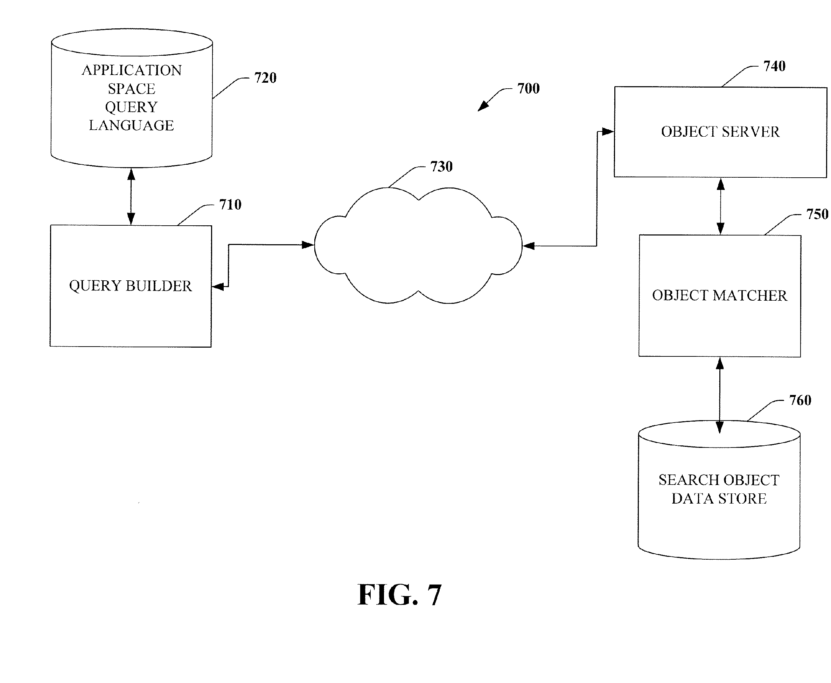

FIG. 7 is a system block diagram of a query composition system 700. The query construction system 700 can allow an application programmer or other user to compose queries that can be integrated with other components on a computing system or that can be used as freestanding query components. Specifically, the query construction system 700 can allow for composition of queries from preexisting components that can be matched to a user-defined query and obtained from a remote computer.

The query composition system 700 includes a query builder 710. The query builder 710 can be implemented as described in conjunction with the query builder 610 of FIG. 6. Alternatively, a different query building system can be used as the query builder 710. Specifically, fewer than all the features described in conjunction with the query builder 610 of FIG. 6 can be included in the query builder 710 or additional feature can be added.

The query builder 710 can access an application space query language 70 when constructing a query. The application space query language 710 can be implemented as previously described in conjunction with other figures or can be another suitable query language. The query builder 710 can use a schema (not shown) when accessing the application space query language 720 or can incorporate rules of such a language in operation, among other approaches.

The query builder 710 can create a descriptor of a constructed query to use to obtain an appropriate search object that either precisely defines the query or is a close match that can be modified to define the constructed query. This descriptor can be any suitable descriptor such as an object descriptor, a hash, or some other appropriate descriptor. Types of appropriate descriptors will largely depend upon a specific implementation.

The query builder 710 can send the descriptor (not shown) over a network 730 to an object server 740. The object server 740 can send the descriptor to an object matcher 750. The object matcher 750 can access a data store of search objects 760 to obtain a search object that either exactly or approximately matches the query that is represented by the descriptor.

The object matcher 750 can use a variety of methods to match a descriptor with a search object of the search object data store 760. In addition to a number of conventional matching procedures, the object matcher can user components that include artificial intelligence to locate matching search objects. For example, matching of a descriptor with an appropriate search object can be carried out by a neural network, an expert system, a rules-based processing component, or a support vector machine (SVM).

A classifier is a function that maps an input attribute vector, X= (*x*₁, *x*₂, *x*₃, *x*₄, ...*x*ₙ), to a confidence that the input belongs to a class, that is, *f*(*X*) = *confidence*(*class*). Such a classification can employ a probabilistic and/or statistical-based analysis (for example, factoring into the analysis utilities and costs) to prognose or infer an action that a user desires to be automatically performed. In the case of the object matcher 750, descriptors can be treated as patterns that can be classified to determine whether such patterns match a corresponding pattern of a search object. Other pattern-matching tasks can also be employed as will be evident to an artisan of ordinary skill upon reading this disclosure.

An SVM is an example of a classifier that can be employed. The SVM operates by finding a hypersurface in the space of possible inputs, which hypersurface attempts to split the triggering criteria from the non-triggering events. Intuitively, this makes the classification correct for testing data that is near, but not identical to training data. Other directed and undirected model classification approaches include, for example, naive Bayes, Bayesian networks, decision trees, and probabilistic classification models providing different patterns of independence can be employed. Classification as used herein also includes statistical regression that is utilized to develop models of priority.

As will be readily appreciated from the subject specification, components disclosed or described herein can employ classifiers that are explicitly trained (for example, by a generic training data) as well as implicitly trained (for example, by observing user behavior, receiving extrinsic information). For example, SVMs can be configured by a learning or training phase within a classifier constructor and feature selection module. Thus, the classifier(s) can be used to automatically perform a number of functions including but not limited to determining whether a descriptor matches a search object.

In operation, the query composition system can function as follows. The query builder 710 can create a query in accordance with an application space query language. Once such a query is constructed, the query builder 710 can create a descriptor of that query and send the descriptor over the network 730 to the object server 740.

Upon receiving the descriptor, the object server 740 passes the descriptor to the object matcher 750. The object matcher 750 uses the descriptor to identify a search object from the search object data store 760 that can be used directly or modified to perform the constructed query. The object server 740 sends the matching object over the network 730 to the query builder 710. The query builder 710 then makes any modifications to the object that are necessary for performance of a correct query and makes the object available for use.

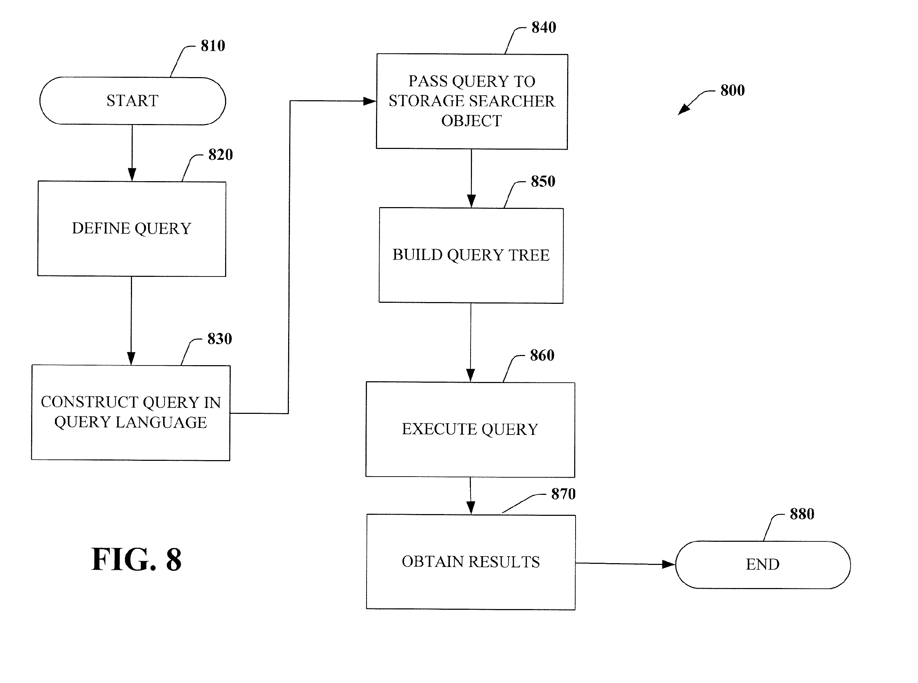

FIG. 8 is a flow diagram of a process 800 that can be employed with components that have been disclosed or described herein. The process 800 can be used to build modular queries that can be reused in other processes or queries. Additionally, the query that is built can be used to access a file system to locate information that is responsive to the query.

Execution of the process 800 begins at START block 810 and continues to process block 820. At process block 820 a query (or portion thereof) is defined. At process block 830, a formal query (or portion thereof) is constructed in a predefined query language, such as an application space query language as described in conjunction with other figures. Processing continues to pass the constructed query to a storage searcher object at process block 840. A query tree is built from the constructed query at process block 850. At process block 860, the query is executed. Results of the executed query are obtained at process block 870. Processing concludes at END block 880.

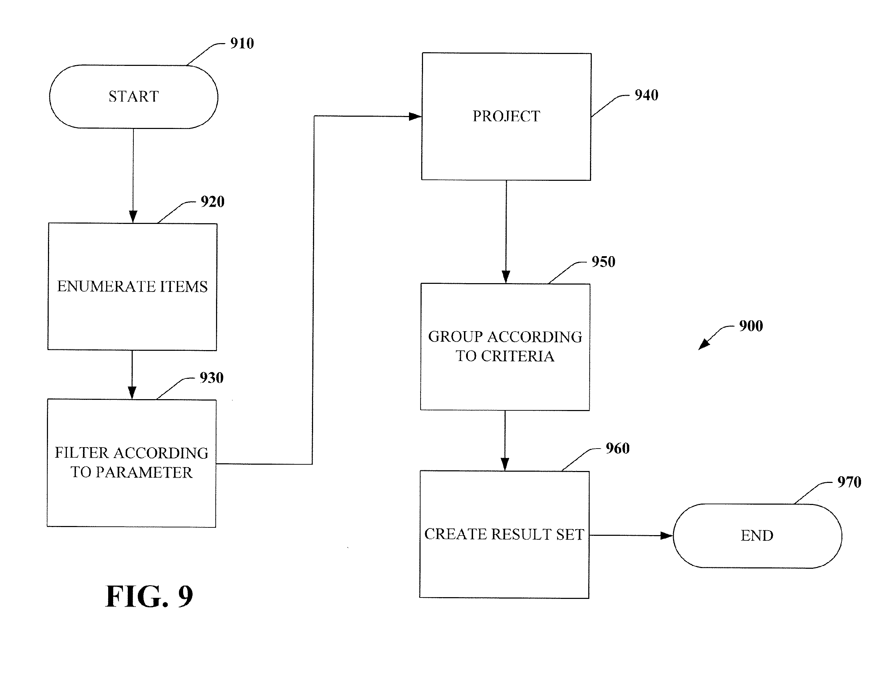

FIG. 9 is a flow diagram that depicts a method 900 that can be used in conjunction with components that have been disclosed or described herein. The method 900 can be used to execute a query that has been constructed in an object-oriented design paradigm. Such query can be reused by other components.

Processing of the method 900 begins at START block 910. Processing continues to process block 920 where a search object enumerates items to be used in the search. At process block 930, a filter is applied to limit items in the search set to those that meet the filter criterion or criteria. At process block 940, a projection is performed to manipulate remaining data. Processing continues to process block 950 where a sort or group operation is performed to group data in a desired fashion. At process block 960 a query result set is created. Processing concludes at END block 970.

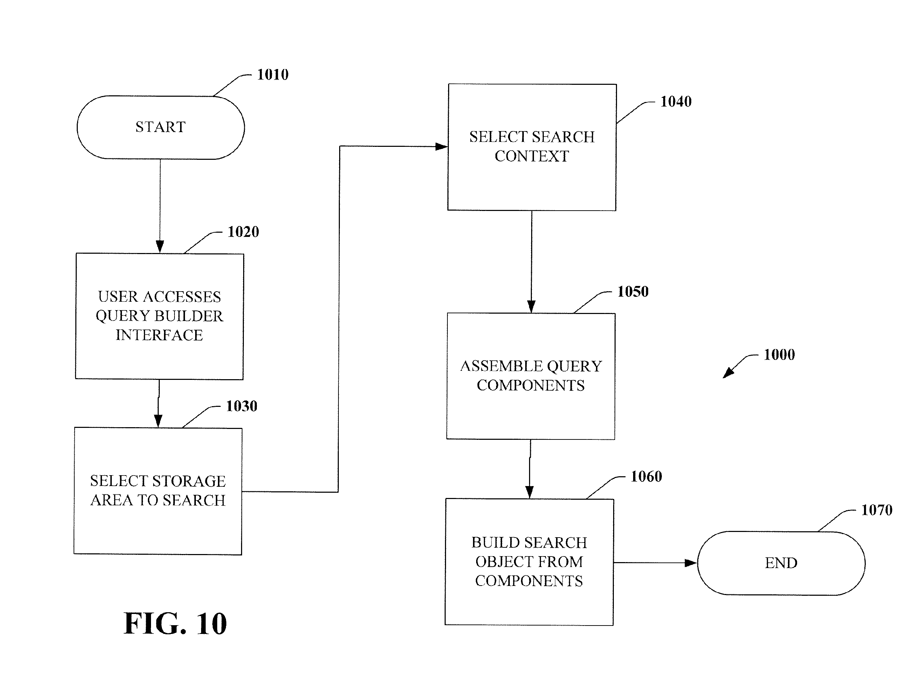

FIG. 10 is a flow diagram of a general processing method 1000 that can be used in conjunction with components that have been disclosed or described herein. Execution of the method 1000 begins at START block 1010 and continues to process block 1020. At process block 1020, a user access a query builder interface to construct a query. A storage area for a query being constructed to search is selected at process block 1030. Processing continues to process block 1040 where a context for the search is selected.

At process block 1050, components of the query being constructed are assembled in accordance with a predefined query language such as an application space query language, among others. Processing continues to process block 1060 where a search object is constructed from the assembled query components. Processing concludes at END block 1070.

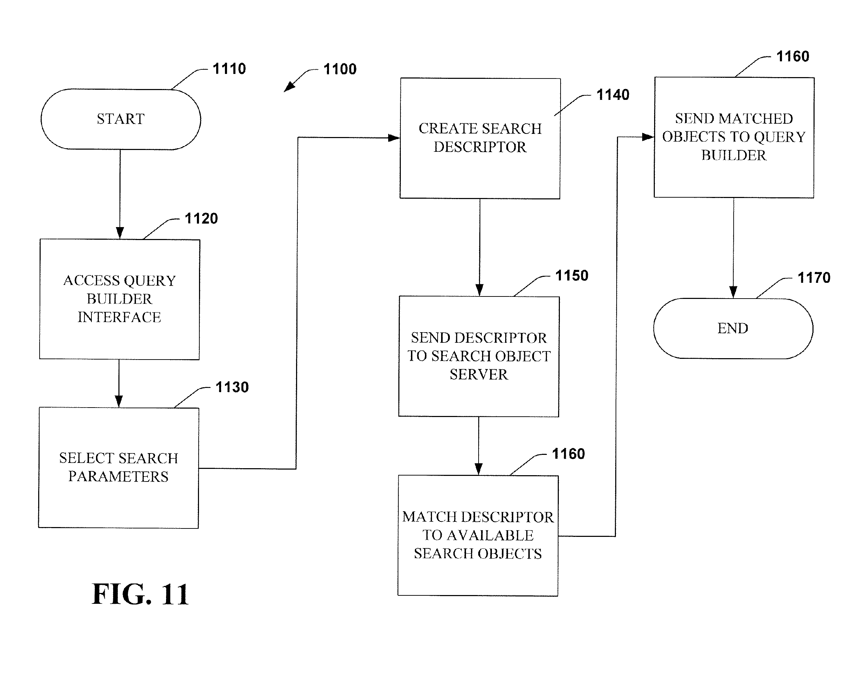

FIG. 11 is a flow diagram of a general processing method 1100 that can be used in conjunction with components that have been disclosed or described herein. Execution of the method 1100 begins at START block 1110 and continues to process block 1120 where a user accesses a query builder interface. At process block 1130, search parameters are selected by the user or the query builder, or both.

Processing continues to process block 1140 where an appropriate descriptor of the search parameters is created. At process block 1150, the descriptor is sent to a search object server. The descriptor is matched to one or more available search objects at process block 1160. One or more matched search objects are sent to the query builder at process block 1170. Processing terminates at END block 1180.

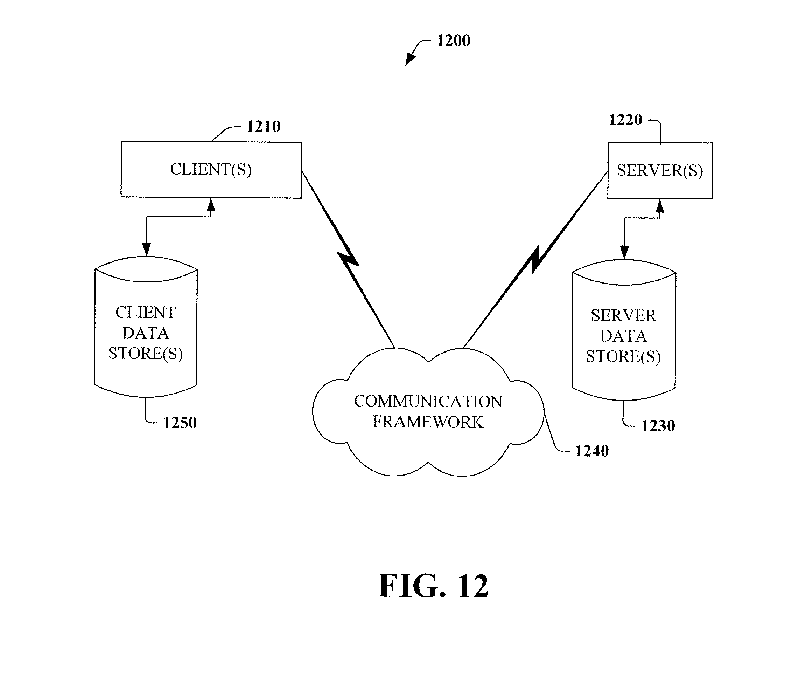

In order to provide additional context for implementing various aspects of the subject invention, FIGS. 12 - 13 and the following discussion is intended to provide a brief, general description of a suitable computing environment within which various aspects of the subject invention may be implemented. While the invention has been described above in the general context of computer-executable instructions of a computer program that runs on a local computer and/or remote computer, those skilled in the art will recognize that the invention also may be implemented in combination with other program modules. Generally, program modules include routines, programs, components, data structures, etc., that perform particular tasks and/or implement particular abstract data types.

Moreover, those skilled in the art will appreciate that the inventive methods may be practiced with other computer system configurations, including single-processor or multi-processor computer systems, minicomputers, mainframe computers, as well as personal computers, hand-held computing devices, microprocessor-based and/or programmable consumer electronics, and the like, each of which may operatively communicate with one or more associated devices. The illustrated aspects of the invention may also be practiced in distributed computing environments where certain tasks are performed by remote processing devices that are linked through a communications network. However, some, if not all, aspects of the invention may be practiced on stand-alone computers. In a distributed computing environment, program modules may be located in local and/or remote memory storage devices.

FIG. 12 is a schematic block diagram of a sample-computing environment 1200 with which the subject invention can interact. The system 1200 includes one or more client(s) 1210. The client(s) 1210 can be hardware and/or software (e.g., threads, processes, computing devices). The system 1200 also includes one or more server(s) 1220. The server(s) 1220 can be hardware and/or software (e.g., threads, processes, computing devices). The servers 1220 can house threads or processes to perform transformations by employing the subject invention, for example.

One possible means of communication between a client 1210 and a server 1220 can be in the form of a data packet adapted to be transmitted between two or more computer processes. The system 1200 includes a communication framework 1240 that can be employed to facilitate communications between the client(s) 1210 and the server(s) 1220. The client(s) 1210 are operably connected to one or more client data store(s) 1250 that can be employed to store information local to the client(s) 1210. Similarly, the server(s) 1220 are operably connected to one or more server data store(s) 1230 that can be employed to store information local to the servers 1240.

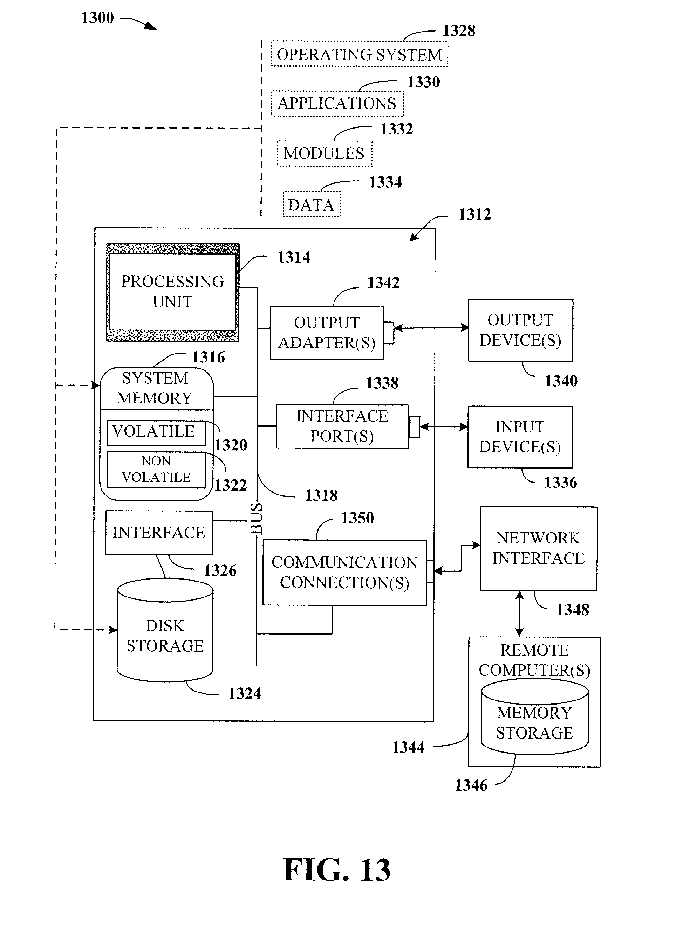

With reference to FIG. 13, an exemplary environment 1300 for implementing various aspects of the invention includes a computer 1312. The computer 1312 includes a processing unit 1314, a system memory 1316, and a system bus 1318. The system bus 1318 couples system components including, but not limited to, the system memory 1316 to the processing unit 1314. The processing unit 1314 can be any of various available processors. Dual microprocessors and other multiprocessor architectures also can be employed as the processing unit 1314.

The system bus 1318 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 1316 includes volatile memory 1320 and nonvolatile memory 1322. The basic input/output system (BIOS), containing the basic routines to transfer information between elements within the computer 1312, such as during start-up, is stored in nonvolatile memory 1322. By way of illustration, and not limitation, nonvolatile memory 1322 can include read only memory (ROM), programmable ROM (PROM), electrically programmable ROM (EPROM), electrically erasable ROM (EEPROM), or flash memory. Volatile memory 1320 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1312 also includes removable/non-removable, volatile/non-volatile computer storage media. For example, FIG. 13 illustrates a disk storage 1324. The disk storage 1324 includes, but is not limited to, devices like a magnetic disk drive, floppy disk drive, tape drive, Jaz drive, Zip drive, LS-100 drive, flash memory card, or memory stick. In addition, disk storage 1324 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1324 to the system bus 1318, a removable or non-removable interface is typically used such as interface 1326.

It is to be appreciated that FIG. 13 describes software that acts as an intermediary between users and the basic computer resources described in the suitable operating environment 1300. Such software includes an operating system 1328. The operating system 1328, which can be stored on the disk storage 1324, acts to control and allocate resources of the computer system 1312. System applications 1330 take advantage of the management of resources by operating system 1328 through program modules 1332 and program data 1334 stored either in system memory 1316 or on disk storage 1324. It is to be appreciated that the subject invention can be implemented with various operating systems or combinations of operating systems.

A user enters commands or information into the computer 1312 through input device(s) 1336. The input devices 1336 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1314 through the system bus 1318 via interface port(s) 1338.
Interface port(s) 1338 include, for example, a serial port, a parallel port, a game port, and a universal serial bus (USB). Output device(s) 1340 use some of the same type of ports as input device(s) 1336. Thus, for example, a USB port may be used to provide input to computer 1312, and to output information from computer 1312 to an output device 1340. Output adapter 1342 is provided to illustrate that there are some output devices 1340 like monitors, speakers, and printers, among other output devices 1340, which require special adapters. The output adapters 1342 include, by way of illustration and not limitation, video and sound cards that provide a means of connection between the output device 1340 and the system bus 1318. It should be noted that other devices and/or systems of devices provide both input and output capabilities such as remote computer(s) 1344.

Computer 1312 can operate in a networked environment using logical connections to one or more remote computers, such as remote computer(s) 1344. The remote computer(s) 1344 can be a personal computer, a server, a router, a network PC, a workstation, a microprocessor based appliance, a peer device or other common network node and the like, and typically includes many or all of the elements described relative to computer 1312. For purposes of brevity, only a memory storage device 1346 is illustrated with remote computer(s) 1344. Remote computer(s) 1344 is logically connected to computer 1312 through a network interface 1348 and then physically connected via communication connection 1350. Network interface 1348 encompasses wire and/or wireless communication networks such as local-area networks (LAN) and wide-area networks (WAN). LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1350 refers to the hardware/software employed to connect the network interface 1348 to the bus 1318. While communication connection 1350 is shown for illustrative clarity inside computer 1312, it can also be external to computer 1312. The hardware/software necessary for connection to the network interface 1348 includes, for exemplary purposes only, internal and external technologies such as, modems including regular telephone grade modems, cable modems and DSL modems, ISDN adapters, and Ethernet cards.

What has been described above includes illustrative examples of certain components and methods. It is, of course, not possible to describe every conceivable combination of components or methodologies, but one of ordinary skill in the art will recognize that many further combinations and permutations are possible. Accordingly, all such alterations, modifications, and variations are intended to fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (for example, a functional equivalent), even though not structurally equivalent to the disclosed structure, which performs the function in the herein illustrated examples. In this regard, it will also be recognized that the disclosed and described components and methods can include a system as well as a computer-readable medium having computer-executable instructions for performing the acts and/or events of the various disclosed and described methods. [00105] In addition, while a particular feature may have been disclosed with respect to only one of several implementations, such feature can be combined with one or more other features of the other implementations as desired and advantageous for any given or particular application. Furthermore, to the extent that the terms "includes," and "including" and variants thereof are used in either the detailed description or the claims, these terms are intended to be inclusive in a manner similar to the term "comprising."

## Claims

1. A system that constructs information search queries, comprising:
a query language that has a predefined syntax; and
a constructor that creates a first search object that encapsulates a query constructed in the query language.

2. The system of claim 1, the encapsulated query is represented as a tree structure.

3. The system of claim 2, the tree structure of the encapsulated query references a second tree structure different from the tree structure of the encapsulated query.

4. The system of claim 3, further comprising:
a second search object that encapsulates the first search object.

5. The system of claim 4, further comprising an interface to a file system that can be searched by the second search object.

6. The system of claim 5, the file system resides on a disk drive.

7. The system of claim 5, the file system resides on a redundant array of independent disks.

8. A computer-readable medium comprising machine-interpretable data structures that include the components of claim 4.

9. A method for creating search queries, comprising:
defining at least a part of, up to and including an entire, query using a query language with a predefined syntax; and
constructing a first search object that encapsulates the defined part of the query.

10. The method of claim 9, further comprising:
representing the defined query as a first tree structure.

11. The method of claim 10, further comprising:
using the first tree structure to reference a second tree structure different than the first tree structure.

12. The method of claim 11, further comprising:
creating a second search object that encapsulates the first search object.

13. The method of claim 12, further comprising using the second search object to locate information in a file system.

14. The method of claim 13, wherein using the second search object includes accessing a file system interface.

15. A system that creates search queries, comprising:
means for defining at least a part of, up to and including an entire, query using a query language with a predefined syntax; and
means for constructing a first search object that encapsulates the defined part of the query.

16. The system of claim 15, further comprising:
means for representing the defined query as a first tree structure.

17. The system of claim 16, further comprising:
means for using the first tree structure to reference a second tree structure different than the first tree structure.

18. The system of claim 17, further comprising:
means for creating a second search object that encapsulates the first search object.

19. The system of claim 18, further comprising means for using the second search object to locate information in a file system.

20. The system of claim 19, the means for using the second search object includes means for accessing a file system interface.
